Europäisches Patentamt

European Patent Office

Office européen des brevets

(11) Publication number: 0 366 256 A2

# EUROPEAN PATENT APPLICATION

(21) Application number: 89309389.8

(22) Date of filing: 15.09.89

(51) Int. Cl.⁵: B30B 11/22 , B29C 47/10 , B29C 47/30

(30) Priority: 28.10.88 US 263838

(43) Date of publication of application:
02.05.90 Bulletin 90/18

(84) Designated Contracting States:
AT BE CH DE ES FR GB GR IT LI LU NL SE

(71) Applicant: WARNER-LAMBERT COMPANY
201 Tabor Road
Morris Plains New Jersey 07950(US)

(72) Inventor: Killeen, Michael James
Route No. 1, Box 269
Lafayette New Jersey 07848(US)

(74) Representative: Jones, Michael Raymond et al
HASELTINE LAKE & CO. Hazlitt House 28
Southampton Buildings Chancery Lane
London WC2A 1AT(GB)

(54) Extruder for an edible anion exchange resin delivery system.

(57) An extruder for a Bingham plastic-like material such as an anion exchange resin delivery system comprises a roll extruder (18) which draws uniform anion exchange resin delivery system material through counter-rotating rollers (26,28) and forces the drawn material into a die block (20) where it is divided into portions. The portions are then extruded through a plurality of linearly aligned extruder ports (48) which are formed in the die block (20). The cross-sectional shapes of all extruder ports are substantially similar, but the cross-sectional area of the end ports (50a,b) are larger than the intermediate ports (48) in order to compensate for the inability of the rollers to evenly process the Bingham plastic-like material.

# EXTRUDER FOR AN EDIBLE ANION EXCHANGE RESIN DELIVERY SYSTEM

This invention pertains generally to extruding devices which are useful for forming moldable materials into desired shapes. More specifically, the present invention pertains to an array of extruder ports used with such a device which transform moldable material into separate uniformly-shaped bars of the material. The present invention is particularly, but not exclusively, useful of the extrusion of bars of an anion exchange resin delivery systems which have the characteristics of a Bingham plastic.

Extruding devices for shaping certain materials into desired configurations are well known. Indeed,many examples can be given of devices which form moldable material into desired shapes by forcing the material through a die. For instance, it is well known that polyethylene pipes are made by forcing a resin through extruders. Likewise, it is well know that food products such as animal feed, candies, cookies and licorice ropes can be formed by processes which employ extruders.

Where commercially effective mass production of consumer product is important, extruders can frequently be used to great advantages. Indeed, many production lines which are designed to mass produce food products, such as cookies and candy bars, use extruders. Before actually being extruded, however, the moldable material, e.g. cookie dough, is often batched together in undefinable individual shapes. In forming these shapes into properly apportioned shapes, the material is typically drawn through parallel mounted counterrotating rollers and then fed into a die having rectilinearly aligned extruder ports. The material is then extruded through the ports to uniformly shaped articles which are commercially attractive. Importantly, a rectilinear alignment of extruder ports presents lines of product which can be easily moved by a conveyor belt to a packaging location.

As will be readily apparent to the skilled artisan, the physical characteristics of the material being extruded will dictate what kind of equipment can be used and the effective operational parameters of this equipment Cookie dough, for instance, is relatively easy to handle. Consequently, a cookie forming machine allows for a great deal of variance in its operating parameters. This is not so when working with material which is more difficult to process. For example, unlike cookie dough, a material such as the anion exchange resin material disclosed in United States Patent Application No. 263846 entitled "Anion Exchange Resin Delivery System" which is assigned to the same assignee as the present invention, causes several unique problems while it is being processed. More specifically, the unique problems with the anion exchange resin material arise because it has the characteristics of a Bingham plastic.

Anion exchange resins useful in the present invention include those edible anion exchange resins having anticholesteremic properties which promote a reduction of cholesterol levels in the blood. Preferred anion exchange resins include cholestyramine, colestipol and anion exchange resins having the imidazolium group as the functional group. Preferred resins of the imidazolium type are described in U.S. Patent No. 4,557,930 the entire contents of which are hereby incorporated by reference.

A Bingham plastic is a non-Newtonian fluid which is characterized by a rheological flow curve that has a very steep slope in the region below the material's yield point. As a practical matter, this means that the material is unusually resistive to shear forces. It happens that nonlinear fluid flow conditions occur whenever unequal forces are exerted on the material. As can be expected, this can cause severe processing problems.

The problem addressed by the present invention concerns the difficulty of forming a Bingham plastic material, such as a anion exchange resin delivery system, into equal proportions when conventional process machinery is used. As indicated above, counterrotating parallel rollers are typically used in machinery which mass produce certain food products, such as cookies and candy bars. During the operation of such machinery, it is known that the counterrotating rollers establish a pressure wave on the material that is drawn between the rollers. More specifically, it is known that this wave creates greater pressures on the material at the ends of the rollers and that this pressure gradually decreases to some minimum value at the center of the rollers. Further, due to the nature of Bingham plastics, it happens that this force distribution causes proportionately more material to be drawn through the center of the rollers than is drawn through the rollers in the region near their ends. In light of this, it is to be appreciated that the specific problem confronted by the present invention essentially concerns compensating for the uneven advance of anion exchange resin material through counterrotating parallel rollers. The present invention recognizes that the required compensation can be accomplished by properly sizing the ports in the die through which the material is to be extruded.

Accordingly, it is an object of the present invention to provide a device which is effective for processing material, such as an anion exchange resin delivery system, having the physical characteristics of a Bingham plastic. It is another object of the present invention to provide a device which will simultaneously form an anion exchange resin product into a plurality of substantially equal portions. Still another object of the present invention is to provide a device which is relatively easy to operate and which is cost effective.

A preferred embodiment of the novel material extruder device comprises a pair of counterrotating cylindrical-shaped rollers which are mounted in parallel and spaced apart to establish a slot therebetween through which the material to be extruded can be drawn. The surfaces of the rollers are serrated to cause some of the material to adhere thereto and provide a texture which clings to and draws other material into the slot between the rollers. A filler block, formed with a line of cavities that are separated by a plurality of blades, is mounted on the device with the block's blades extending into the slot between the rollers. A die having a plurality of funnels rectilinearly formed in a side-by-side relationship is attached to the filler block. With this attachment, the funnels in the die block are respectively aligned with the cavities of the filler block. The filler block and die block receive the material and divide it into discrete portions before it is forced into the funnels of the die block. Each funnel is formed with an outlet channel and has an associated port through which the material is extruded into a desired shape. The formed material is then passed to a conveyor belt for transport from the device for further processing. A cutter may also be provided to cut the extruded material into the predetermined sizes.

In accordance with the present invention, the channels and extruder ports at the ends of the die are larger in cross-sectional area than the channels and extruder ports which are between those at the ends of the die. In an alternate embodiment, the linearly aligned outlet channels and extruder ports become appropriately larger in proportion to their distance from the center of the die.

The novel features of this invention, as well as the invention itself, both as to its structure and its operation, will be best understood from the accompanying drawings, taken in conjunction with the accompanying description, in which similar reference characters refer to similar parts, and in which:

Figure 1 is a perspective view of machinery which incorporates the roll extruder and die assembly of the present invention;

Figure 2 is a perspective view of the roll extruder and die assembly in combination;

Figure 3 is a cross-sectional view of the roll extruder and die assembly in combination as seen along the line 3-3 in Figure 2; and

Figure 4 is a partial cross-sectional view of the roll extruder and die assembly in combination as seen along the line 4-4 in Figure 2.

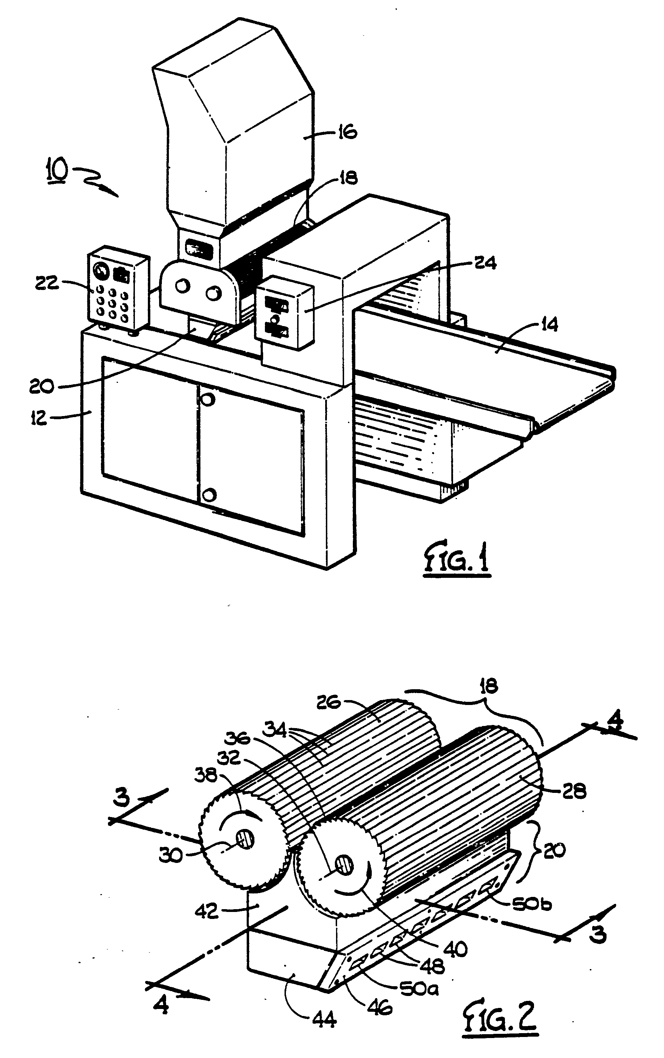

Referring initially to Figure 1, a machine including a material extruder with hopper feed system is shown and generally designated 10. As shown, machine 10 essentially comprises a base 12 on which a conveyor 14, a hopper 16, a roll extruder 18 and a die assembly 20 are operatively mounted.

In accordance with the present invention, hopper 16 is mounted above and in a relationship with roll extruder 18 which permits roll extruder 18 to draw material from hopper 16. Die assembly 20 is mounted against roll extruder 18 and oppositely from hopper 16 so that material which is drawn from hopper 16 by roller extruder 18 is forced by roll extruder 18 into die assembly 20. Within die assembly 20, the material is divided into portions and shaped into equally sized commercially attractive products. As shown in Figure 1, conveyor 14 is positioned on base 12 below die assembly 20 to receive the material extruder through die assembly 20 and to transport the material from die assembly 20 to a location where packaging procedures can be accomplished. Although the conveyor 14 may have a smooth surface, when a Bingham plastic-like material is being processed, conveyor 14 preferably has a tacky surface on which the processed material will not slide. Control panels 22 and 24 are conveniently mounted on base 12 to provide means by which an operator can control the operation of machine 10.

Referring now of Figure 2, it will be seen that roll extruder 18 comprises a pair of cylindrical-shaped rollers 26 and 28 which are spaced apart and respectively mounted for counterrotation about the substantially parallel axes 30 and 32. It will be appreciated by the skilled artisan that the surfaces of rollers 26 and 28 may be provided with serrations 34 which extend longitudinally along these surfaces. When so provided, serrations 34 cause some of the material being processed to cling to the surface of roller 26 and 28 for the purpose of helping draw additional material into the slot 36 which is established by the space between rollers 26 and 28. As should be appreciated, the drawing of material into slot 36 is primarily caused by the counterrotating action of rollers 26 and 28. As indicated in Figure 2, this results when roller 26 rotates in the direction of arrow 40. It is to be understood that operative connections between machine 10 and rollers 26 and 28 cause rollers 26 and 28 to counterrotate in a manner well known in the pertinent art.

As intended by the present invention, once material is drawn through roll extruder 18, it is then forced by roll extruder 18 through die assembly 20. Briefly stated, die assembly 20 is intended to cut the material into portions and from these portion into equally sized and shaped products. As best seen in Figure 2, die assembly 20 comprises a filler block 42 which is mounted on base 12 and operatively positioned below roller extruder 18. In accordance with subsequent disclosure, it will be seen that it is filler block 42 which cuts the material into portions. The shaping of the material is done by a die block 44 which is attached to filler block 42 in any manner well known in the art, such as by bolts or screws. A clamp plate 46 is mounted onto die block 44 to provide an additional shaping means for the material. Figure 2 also shows that die block 44 is formed with a plurality of ports 48 which extend linearly along the die block 44 in an orientation which is substantially parallel to the longitudinal axes 30 and 32 of rollers 26 and 28. An end port 50a and an port 50b are formed on die block 44 at the ends of the line of ports 48 substantially as shown. Further, as shown in Figure 2, the ports 48 and end ports 50a and 50b are substantially rectangular.

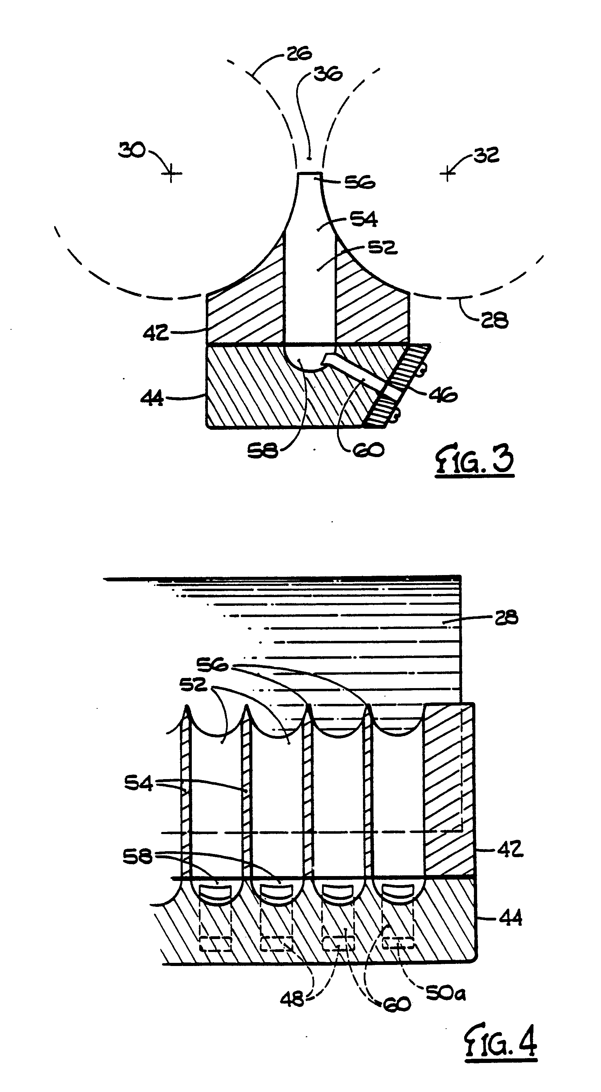

A more detailed appreciation of the structural cooperation between roll extruder 18 and die assembly 20 can be had with reference to both Figure 3 and 4. By cross-referencing Figure 3 and Figure 4 it will be seen that filler block 42 is formed with a plurality of hollow cavities 52 which are separated from each other by walls 54. Further, it is shown that walls 54 extend upwardly from filler block 42 to form blades 56 which can be positioned into slot 36 between rollers 26 and 28 of roll extruder 18. Figure 3 shows that die block 44 is attached to filler block 42 in a manner which aligns funnels 58 of die block 44 with cavities 52 of filler block 42. Channels 60 are formed into die block 44 as extensions of funnels 58 to establish passageways between filler block 42 and the respective ports 48 or end ports 50a and 50b through which moldable material can be extruded.

It will be appreciated by the skilled artisan that channels 60 have a uniform cross-sectional area which is substantially the same cross-sectional area as their respectively associated ports 48 or end ports 50a and 50b. Further, for proper extrusion of material, it will be appreciated by the skilled artisan that the effective operational length of the outlet (i.e. length of channel 60 from the bowl of funnel 58 to the respective ports 48 or end ports 50a and 50b) will be dependent on the physical characteristics of the material being extruded therethrough. Preferably, for a Bingham plastic-like material (such as a anion exchange resin delivery system preferably a cholestyramine delivery system) the length of channel 60 will be at least approximately 0.37 inches but will not be much longer than this dimension. This is so because, if channel 60 is too short the material will not form properly, i.e. the material will begin to feather and portions of the surface of the extruder material will curl outwardly. On the other hand, if channel 60 is too long, excessive back pressure will be generated which impedes the flow of the material.

Importantly, for the present invention, channels 60 and their respective ports 48 or end ports 50a and 50b are not equally dimensioned. Specifically, it has been determined that the finally extruded product is more equally proportioned if the cross-sectional areas of end ports 50a and 50b are larger than these areas for ports 48. This is necessary in order to mechanically compensate for the unequal manner in which roll extruder 18 is able to draw Bingham plastic-like material into filler block 42 and die block 44. With this in mind, ports 48 are preferably of a substantially rectangular configuration having height and width dimensions which are approximately 0.375 inches and 0.875 inches respectively. On the other hand, end ports 50a and 50b are essentially similar to each other and are preferably of a substantially rectangular configuration having height and width dimensions which are approximately 0.390 inches and 0.885 inches respectively.

More important, however, than the actual dimensions of ports 48, and the end ports 50a and 50b are their relative dimensions. Thus, it is the proportional variations in cross-sectional areas through which the Bingham plastic-like material is extruded that allows it to be properly handled. In an alternate embodiment, the relative cross-sectional areas of the channels 60 and their respectively associated ports 48 are larger in proportion to their distance from the center of the line of ports 48.

It will be appreciated by these skilled artisan that after the material is extruded from ports 48, 50a and 50b of die block 44, the material is linearly aligned on conveyor 14 for transport to another location where it can be further processed. As intended by the present invention, a cutter (not shown) can be operatively mounted on machine 10, in any manner well known in the pertinent art, to cut or sever the ropes or bars of extruder material as it leaves die assembly 20. It is to be understood that cutting the material causes discrete commercially viable product portions to be processed by machine 10 for further wrapping and packaging in accordance with the desires of the operator.

In the operation of machine 10, material to be processed is placed into hopper 16. The rollers 26 and 28 of roll extruder 18 are counterrotated to draw material from hopper 16 into a slot 36 which is established between the rollers 26 and 28. During the rotation of rollers 26 and 28, longitudinal serrations 34 thereon cause some of the material to cling to rollers 26 and 28 for the purpose of further facilitating the drawing of material from hopper 16. After the material has passed through slot 36 of roll extruder 18 it is forced into the die assembly 20.

As the material is forced into die assembly 20, the blades 56 of die block 44 which extend into slot 36 separate the material into discrete portions. As roll extruder 18 continues to force material into die assembly 20 this separated material is pushed through cavities 52 of die assembly 20 and forced into funnels 58 of die block 44. With the action of roll extruder 18, the material is then pushed through the channels 60 which respectively extend from the funnels 58. This action causes the material to be extruded from die block 44 through ports 48, 50a and 50b.

In accordance with the present invention, end ports 50a and 50b have larger cross-sectional areas than do ports 48 which are linearly aligned between the end ports 50a and 50b. This particular configuration is necessary in order that the edible anion exchange resin delivery system material, which has characteristics of a Bingham plastic, will have similar sizes and shapes after being extruded through the respective ports 48, 50a and 50b.

While the particular extruder for an anion exchange resin delivery system is herein shown and disclosed in detail is fully capable of obtaining the objects and providing the advantages herein before stated, it is to be understood that it is merely illustrative of the presently preferred embodiments of the invention and that no limitations are intended to the details of construction or design herein shown other than as defined in the appended claims.

## Claims

1. An extrusion device which comprises a pair of counter-rotating rollers mounted with their longitudinal axis in parallel and spaced with respect to each other so as to allow material to be drawn between them and a die block provided with a plurality of channels arranged so as to receive material drawn through the rollers, each channel being in fluid communication with an extruder port through which the extruded material may leave the die block,
characterized in that, with respect to the longitudinal axis of the roller, the cross-sectional dimensions of the channels and extruder ports located near, in relation to the other channels and extruder ports, to the centre of the rollers are relatively smaller than those of the channels and extruder ports located near to the ends of the rollers.

2. A device according to claim 1, wherein the channels are aligned in a linear array parallel to the longitudinal axis of the rollers, with the cross-sectional dimensions of the channels positioned towards the centre of the array being smaller than those of the channels positioned towards the ends of the array.

3. A device according to claim 2, wherein the cross-sectional dimensions of the channels become progressively larger in proportion to their distance from the centre of the array.

4. A device according to claim 1, 2 or 3, which further includes means arranged between the rollers and the die block for separating material drawn between the rollers into substantially equal portions.

5. A device according to claim 4, wherein the means for separating the material is a filler block provided with blades extending into the space between the rollers, the blades being capable of dividing the material drawn between the rollers into discrete portions.

6. A device according to any preceding claim, wherein the rollers have serrated edges.

7. A device according to any preceding claim, wherein the extruder ports are substantially rectilinear in shape.

8. A device according to any preceding claim, which further includes a conveyor belt for moving extruded material away from the extruder ports.

9. A device according to claim 8, wherein the surface of said conveyor belt has a tacky texture to prevent the material sliding thereon.

10. A process for the preparation of shaped material which comprises the steps of:
(a) drawing the material into a slot situated between a pair of counter-rotating rollers;
(b) passing the material through a filler block provided with a plurality of blades linearly aligned with respect to the rollers and which extend into the slot and divide the material into substantially equal proportions;
(c) receiving the divided material in a die block provided with a plurality of channels linearly aligned with respect to the rollers each being in fluid communication with an extruder port, the cross-sectional dimensions of the channels and extruder ports located near, in relation to the other channels and extruder ports, to the centre of the rollers being relatively smaller than those of the channels and extruder ports located near to the ends of the rollers; and
(d) forcing the material through the extruder ports so as to form the material into predetermined shapes.

11. A process according to claim 10, which further comprises the step of:
(e) cutting the shaped material of step (d) into equal parts.

12. A process according to claim 10 or 11, which further comprises the step of:
(f) transporting the material to a location for packaging.

FIG.1

FIG.2

FIG. 3

FIG. 4